# EUROPEAN PATENT SPECIFICATION

(11) **EP 0 914 800 B1**
(45) Date of publication and mention of the grant of the patent: **25.06.2008**
(21) Application number: 98118794.1
(22) Date of filing: 05.10.1998
(51) Int. Cl.: A47L 15/42, D06F 39/00

(54) **Automatic washing machine with energy recovery arrangement**
Automatische Waschmaschine mit Vorrichtung zur Rückgewinnung von Energie
Machine à laver automatique avec dispositif de récupération d'énergie

(30) Priority: 05.11.1997 IT PN970060
(43) Date of publication of application: 12.05.1999
(73) Proprietor: Electrolux Zanussi S.p.A., 33170 Pordenone (IT)
(72) Inventor: Centis, Giovanni, 33074 Fontanafredda, Pordenone (IT); Favaro, Daniele, 30020 Pramaggiore, Venezia (IT)
(74) Representative: Giugni, Valter

(56) References cited:
- EP-A- 0 771 898
- DE-A- 2 730 489
- GB-A- 2 139 083
- GB-A- 2 139 084

## Description

The present invention refers to an automatic washing machine, in particular a dishwashing machine, provided with an arrangement adapted to enable heat to be recovered in view of obtaining an overall energy saving effect.

Washing machines provided with arrangements for recovering water and, possibly, also heat from previously heated-up water are already largely known in the art.

A dishwashing machine is for instance known from EP-A-0 669 097 to be provided with a reservoir adapted to store the water from the last or final rinse phase of the machine in view of using it again as wash water during a subsequent washing cycle of the same machine. In particular, said reservoir is provided in the form of a volumetric metering reservoir and is connected in series with the fresh water supply circuit of the machine, so that it is automatically "washed", ie. flushed by inflowing water from the mains each time that said water supply circuit is opened.

With this solution, the reservoir is substantially protected from scaling and sanitary problems in general. However, the water that it is adapted to recover and fill again into the washing vessel of the machine through appropriate auxiliary fittings and connections is anyway polluted, since it has already been used in a previous operating phase, which may for instance have been a final rinse phase, in which the water is mixed with a rinsing aid additive, or any other similar phase.

GB-A-2139084 discloses a dishwashing machine provided with a reserve container which is thermally conductively connected to a rinsing container. The reserve container is directly fed by the water supply mains and is divided into an upper volume for preliminary rinse and a lower volume for a clean rinse. All water coming from said volumes passes through a softening equipment before reaching the rinsing container.

In view of bringing about a thermal energy recovery effect that would not involve a reutilization of already polluted water, dishwashing machines have also been proposed in which the reservoir is not only connected in series with the water supply circuit of the machine, but is also in a heat-exchange relation with the washing vessel thereof. Instead of being used to temporarily store water recovered from an operating phase of the machine in view of a subsequent reutilization thereof, the reservoir is filled with fresh water flowing in from the mains in a pre-determined period of time during an ongoing washing phase in which the water in the washing vessel of the machine is heated-up, in such a manner as to enable the thermal energy in that heated-up water to be partially transferred to the fresh water so filled in the reservoir. The so pre-heated water in the reservoir is subsequently filled into the washing vessel of the machine in view of carrying out a traditional "cold" rinse phase, ie. a phase not requiring any additional heating up of the same water. It is in fact a common knowledge that the main operating cycles of household-type dishwashing machines usually include, in a sequence, a washing phase with hot water, one or more rinsing phases with cold water, a final rinse phase with hot water, and a final dish drying phase.

Therefore, the heat recovery effect brought about by the above described solution appears to be substantially irrational, since it can actually be used only to carry out an operating phase in which water heating is not at all so significant. It would on the contrary be much more significant and desirable to be able to use the heat, ie. thermal energy recovered from the washing phase to carry out the subsequent "hot" rinsing phase, in which water heating is in fact of primary importance.

It therefore is a main purpose of the present invention to provide an automatic washing machine provided with an energy recovery arrangement which on one side is efficient and rational, and on the other side does not imply any reutilization of water that has been polluted during previous operating phases.

In particular, it is a purpose of the present invention to provide a washing machine of the above cited kind, which is capable of recovering in a simple manner thermal energy used during a washing phase in view of reusing it only during a subsequent "hot" rinsing phase, rather than during any intermediate "cold" rinse.

It is a further purpose of the present invention to provide a washing machine of the above cited kind, which is adapted to use the supply water in such a manner as to obtain an optimum energy balance during its overall operation cycle.

According to the present invention, such aims are reached in an automatic washing machine with an energy recovery arrangement embodying the features and characteristics as recited in the appended claims.

The features and advantages of the present invention will anyway be more readily understood from the description which is given below by way of non-limiting example with reference to the accompanying drawing, in which:
- Figure 1 is a schematical view of the main component parts of such a washing machine according to a preferred embodiment of the present invention; and
- Figure 2 is a diagrammatic view of the operating periods of the main functional parts of the machine during the main phases of an operation cycle thereof.

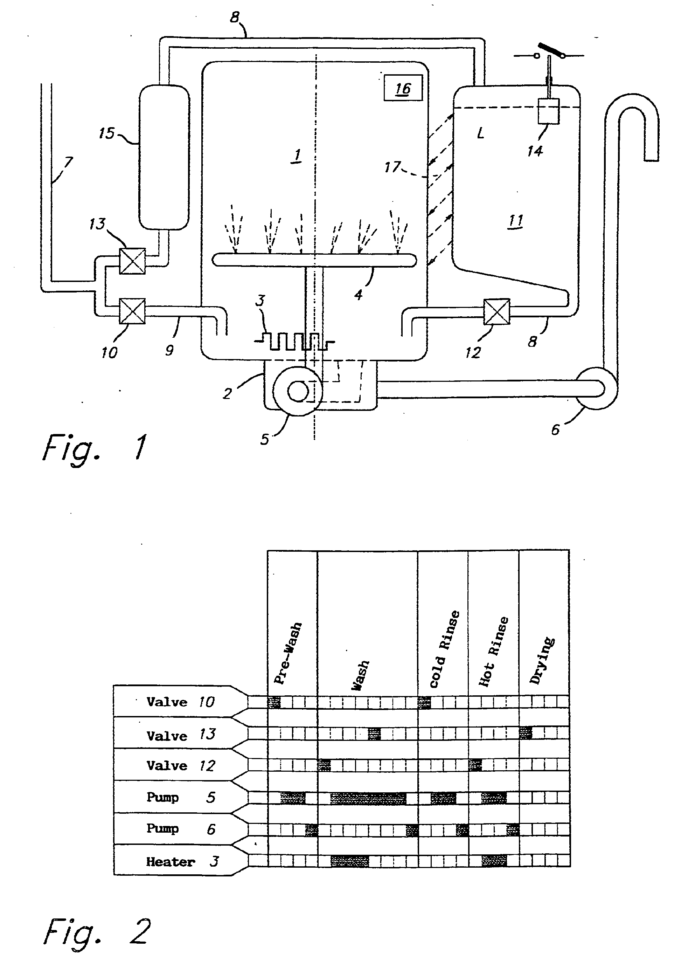

With particular reference to Figure 1, it can be noticed that said automatic washing machine is preferably a domestic dishwashing machine comprising a washing vessel 1 provided on its bottom with a sump 2 for collecting the water which can be heated up by means of an electric resistance-type heating element 3 and sprayed onto the washload items (not shown) through spray means 4 adapted to be supplied by a recirculating pump 5. The water can then be let out of the washing vessel 1 by the action of a drain pump 6.

The washing machine is further provided with a water supply circuit comprising a pipe 7 which is adapted to be connected to the water delivery mains on one side and divides into at least a first and at least a second branch 8 and 9, respectively, on the other side.

In particular, the branch 9 is connected directly to the washing vessel 1 and preferably comprises a normally closed, controlled water inlet valve 10. The branch 8, on the contrary, comprises at least a storage reservoir 11 arranged in series with a normally closed controlled valve 12, through which said branch 8 connects the bottom of said reservoir 11 with the washing vessel 1. Upstream of said reservoir 11, the branch 8 further includes a normally closed controlled valve 13.

It should be noticed that the above mentioned valves 10 and 13 can be replaced with equivalent means, such as for instance a three-way valve capable of interconnecting the pipe 7 with the branches 8, 9 or a single-way controlled valve installed on the pipe 7 and associated to flow-diverting means adapted to selectively connect it with said branches 8, 9.

In any case, the reservoir 11 is preferably provided in the form of a volumetric metering reservoir and, to such a purpose, it is preferably provided with level control means 14, for instance of the float type, that are adapted to enable the valve 13 to open only when the actual level of the water in the same reservoir is lower than a pre-determined level L.

Furthermore, the reservoir 11 is preferably arranged outside the washing vessel 1, with which it is anyway in a heat-exchange relation, in a substantially per sè known manner, as this is indicated schematically by the arrows 17.

The water supply circuit 7-14 further comprises at least a water softener arrangement 15 which is preferably arranged in series in the branch 8 upstream of the reservoir 11.

Quite obviously, a similar water softener arrangement can be provided in series in the branch 9 of the water supply circuit, or a common water softener arrangement can be provided in series in the pipe 7, upstream of said branches 8, 9.

Substantially, all the above described functional members of the machine are adapted to be controlled by the programme sequence control unit of the machine, which is schematically indicated at 16 in Figure 1, in a manner as substantially illustrated in Figure 2.

In a per sè known manner, the dishwashing machine is capable of being operated by the programme sequence control unit 16 so as to carry out an operation cycle comprising, in a sequence, a pre-wash phase (preferably with cold water and capable of being excluded from the cycle), a main washing phase with hot water, at least an intermediate rinsing phase with cold water, at least a final rinsing phase with hot water and, finally, a washload drying phase.

At the beginning of the operation cycle the reservoir 11 is full of clean, fresh water that has been previously filled into the same reservoir from the mains in the way that will be described in greater detail further on.

In order to carry out the pre-wash phase, the programme sequence control unit 16 causes the valve 10 to open so as to fill into the vessel 1, through the pipe 7 and the branch 9 thereof, a pre-determined amount of water from the mains, which is possibly mixed with detergent, sprayed onto the washload items through the operation of the circulating pump 5 and finally let out of the vessel 1 through the operation of the drain pump 6. The heating element 3 is not energized during this phase.

In order to carry out the main washing phase, the programme sequence control unit 16 then causes the valve 12 to temporarily open, so that the metered volume of water contained in the reservoir 11 flows by gravity into the washing vessel 1 through the valve 12 and the terminal portion of the branch 8.

The washing phase is then carried out in a substantially traditional manner, with the circulating pump 5 being appropriately operated and the heating element 3 appropriately energized (under appropriate addition of detergent to the water in the vessel), and is terminated by the water being let out of the vessel 1 through the operation of the drain pump 6.

Anyway, during this washing phase, and preferably after the actual water heating-up period (as it clearly emerges from the illustration in Figure 2), the valve 13 is caused to open so as to fill up again the reservoir 11, through the water softener arrangement 15 and the branch 8 of the water supply circuit, until the level sensor 14 detects the water reaching the afore cited level L in the same reservoir.

Thanks to the heat-exchange process taking place between the washing vessel 1 and the reservoir 11, the clean fresh water so stored in the reservoir 11 heats up in that it absorbs heat from the heated mass (for instance at approx. 60°C) of the washing vessel.

It should in this connection be noticed that such a mass mainly include, apart from the washing vessel itself, the washload, the water and the water carrying circuit 4 housed in the same vessel.

According to a feature of the present invention, such a heating up of the water stored in the reservoir 11 can continue also well into the subsequent cold rinsing phase, since there is actually no need for the water contained in the reservoir to be removed therefrom.

Similarly to the above cited pre-wash phase, in fact, the cold rinsing phase (or phases) takes place under a temporary opening of the valve 10 and the resulting inflow of water from the mains into the vessel 1 through the pipe 7 and the related branch 9. The same water is then sprayed onto the washload items through the operation of the circulating pump 5, and is finally let off the same vessel by means of the drain pump 6. As a matter of fact, it should be noticed that, in modern dishwashing machines, the volume of water let into the vessel in this phase is substantially reduced when compared with the hot mass of the same vessel, the washload items and the therewith associated water carrying circuit 4. During the cold rinsing process, therefore, the above cited mass of the vessel 1 is cooled down to a substantially negligible extent, such as to practically avoid altering the temperature reached by the water stored in the reservoir 11.

In order to carry out the subsequent hot rinsing phase, the programme sequence control unit 16 of the machine causes the valve 12 to temporarily open, so that the (pre-heated, as described afore) water contained in the reservoir 11 flows by gravity into the washing vessel 1 through said valve 12 and the terminal portion of the branch 8. The circulating pump 5 is then operated and the heating element 3 energized, the latter being in this phase required to therefore only complete the heating-up of the water so filled in the vessel 1 (preferably under addition of rinsing aid). Also the hot rinsing phase is terminated by the water being let off the vessel by means of the operation of the drain pump 6.

Conclusively, it can therefore be stated that the thermal energy used to heat up the water of the washing phase is partially recovered by the water stored in the reservoir 11 and reused, while bypassing the intermediate cold rinsing phase or phases, to carry out the subsequent hot rinsing phase under a corresponding energy saving effect. Furthermore, all operating phases of the machine are carried out by only letting clean water from the mains into the washing vessel of the machine, thereby enabling the whole washing machine to be substantially clear of hygienic problems, incrustations and the like, while at the same time obtaining better final washing results, ie. cleaner dishes.

After hot rinsing, the washload drying phase takes place with the programme sequence control unit 16 that causes the valve 13 to open, so that fresh water from the mains is enabled to again flow into the reservoir 11, after due softening through the water softener arrangement 15, via the water supply pipe 7 and the branch 8 thereof, until the level L is reached in the same reservoir.

The reservoir 11 therefore contains a volume of fresh water that can be used in the afore described manner for the washing phase of a subsequent operation cycle of the machine.

It should furthermore be noticed that, thanks to the heat-exchange process taking place between the vessel 1 and the reservoir 11, the cold water filled into the reservoir 11 during the final washload drying phase facilitates vapours to condense inside the same vessel and, therefore, promotes drying of the washload items, as anyone skilled in the art is able to appreciate. Most obviously, washload drying can further be facilitated by letting the heating element 3 operate "in air", in a per sè known manner.

Therefore, it can summarizingly be stated that, according to the present invention, only water used to carry out "hot" operating phases (ie. main washing and hot rinsing) is let into the vessel 1 through the valve 13 and the therewith associated water carrying circuit 7, 8, 11, 12, 15. Furthermore, in the preferred embodiment of the invention only such a water is softened, while the water stored in view of carrying out a subsequent washing phase can in particular be used also to favour a previously performed washload drying phase.

Conversely, only the water used to carry out "cold" operating phases (ie. pre-wash and cold rinsing) is let into the vessel 1 through the valve 10 and the therewith associated water carrying circuit 7, 9. Furthermore, in the present invention such a water does not undergo softening, since it does not involve any substantial scaling problem. This brings about the additional advantage of a lesser usage of the water softener arrangement 15, which therefore needs to be regenerated with brine (in a per sè known manner) to a correspondingly reduced extent.

All this again translates advantageously into a further energy saving effect and a further reduced environment pollution.

It will be appreciated that the above described washing machine may be subject to any of a number of modifications without departing from the scope of the present invention.

## Claims

1. Automatic washing machine comprising a washing vessel (1) adapted to be supplied with water from the mains (7) through a circuit associated to a reservoir (11) that is in a heat-exchange relation with said vessel and adapted to temporarily store water filled in from the mains in view of being subsequently let into the same vessel, wherein said washing machine is adapted to carry out, under the control of a programme sequence control unit, operation cycles including in a sequence a washing phase with hot water, at least a rinsing phase with cold water and at least a rinsing phase with hot water followed by a washload drying phase, said water supply circuit (7) being connected to the washing vessel (1) via a first and a second pipe branch (8,9) that are normally closed by valve means (10,12,13) controlled by the programme sequence control unit (16) so as to selectively supply said vessel (1) via said first pipe branch (8) with the water for carrying out said washing phase and said hot rinsing phase, and via said second pipe branch (9) with the water supplied directly from the mains for carrying out said cold rinsing phase, said reservoir (11) being connected in series in said first pipe branch (8) downstream of a water softener arrangement (15) **characterised in that** via said second pipe branch (9) the washing vessel (1) is supplied with the water supplied directly from the mains.

2. Automatic washing machine according to claim 1, **characterised in that** said valve means (10,12,13) of the water supply circuit (7) are controlled by the programme sequence control unit (16) so as to substantially fill said reservoir (11) via said first pipe branch (8), during said washing phase, with water from the mains, said water being then let into the vessel (1), in order to carry out said hot rinsing phase, only upon conclusion of said cold rinsing phase.

3. Automatic washing machine according to claim 2, in which said washing phase includes a period in which the water in the vessel is heated up by means of heating means controlled by the programme sequence control unit, **characterised in that** said reservoir (11) is filled with water from the mains after said water heating-up period in the vessel (1).

4. Automatic washing machine according to claim 1, **characterised in that** said valve means (10,12,13) of the water supply circuit (7) are controlled by the programme sequence control unit (16) so as to substantially fill said reservoir (11) via said first pipe branch (8), during said washload drying phase, with water from the mains that is then let into the vessel (1) for carrying out a washing phase of a subsequent operation cycle of the machine.

## Patentansprüche

1. Automatische Waschmaschine, die einen Waschbehälter (1) umfasst, der über einen Kreislauf mit Wasser aus der Haushaltswasserleitung (7) versorgt werden kann, wobei der Kreislauf in Verbindung mit einem Tank (11) ist, der in Wärmeaustauschbeziehung mit dem Behälter steht und geeignet ist, vorübergehend Wasser aus der Haushaltswasserleitung zu speichern, so dass dieses in der Folge in den Behälter abgelassen werden kann, wobei die Waschmaschine geeignet ist, unter der Kontrolle einer Programmablaufreglereinheit Betriebszyklen auszuführen, so dass in einer Sequenz eine Heißwasser-Waschphase, mindestens eine Kaltwasser-Spülphase und mindestens eine Heißwasser-Spülphase, gefolgt von einer WaschgutTrocknungsphase enthalten ist, wobei der Wasserzuführungskreislauf (7) mit dem Waschbehälter (1) über einen ersten und einen zweiten Rohrzweig (8, 9) verbunden ist, die normalerweise durch Ventilmittel (10, 12, 13) geschlossen werden, die von der Programmablaufreglereinheit (16) gesteuert werden, um auf diese Weise den Behälter (1) über den ersten Rohrzweig (8) selektiv mit dem Wasser zur Ausführung der Waschphase und der Heißspülphase und über den zweiten Rohrzweig (9) mit dem direkt von der Haushaltswasserleitung kommenden Wasser zu versorgen, um die Kaltwasserspülphase auszuführen, wobei der Tank (11) im ersten Rohrzweig (8), einer Wasserweichmacher-Vorrichtung (15) nachgelagert, in Serie angeschlossen ist, **dadurch gekennzeichnet, dass** der Waschbehälter (1) über den zweiten Rohrzweig (9) mit dem Wasser versorgt wird, das direkt von der Haushaltswasserleitung kommt.

2. Automatische Waschmaschine gemäß Anspruch 1, **dadurch gekennzeichnet, dass** die Ventilmittel (10, 12, 13) des Wasserzuführungskreislaufs (7) von der Programmablaufreglereinheit (16) so gesteuert werden, dass sie den Tank (11) über den ersten Rohrzweig (8) während der Waschphase im wesentlichen mit Wasser von der Haushaltswasserleitung füllen, wobei dieses Wasser anschließend in den Behälter (1) eingelassen wird, um die Heißspülphase erst nach Abschluss der Kaltspülphase durchzuführen.

3. Automatische Waschmaschine gemäß Anspruch 2, in der die Waschphase eine Periode umfasst, in der das Wasser im Behälter durch Heizmittel erhitzt wird, die von der Programmablaufreglereinheit (16) geregelt werden, **dadurch gekennzeichnet, dass** der Tank (11) nach der Wasseraufheizperiode im Behälter (1) mit Wasser von der Haushaltswasserleitung befüllt wird.

4. Automatische Waschmaschine gemäß Anspruch 1, **dadurch gekennzeichnet, dass** die Ventilmittel (10, 12, 13) des Wasserzuführungskreislaufs (7) von der Programmablaufreglereinheit (16) so geregelt werden, dass sie den Tank (11) über den ersten Rohrzweig (8) während der Waschguttrocknungsphase mit Wasser von der Haushaltswasserleitung im wesentlichen befüllen, das anschließen in den Behälter (1) eingelassen wird, um eine Waschphase eines anschließende Betriebszyklus der Maschine durchzuführen.

## Revendications

1. Machine à laver automatique comprenant une cuve de lavage (1) adaptée pour être alimentée en eau provenant de la canalisation principale (7) à travers un circuit associé à un réservoir (11) qui est en relation d'échange thermique avec ladite cuve et adapté pour stocker temporairement de l'eau fournie à partir de la canalisation principale en vue d'être amenée ultérieurement dans cette même cuve, dans laquelle ladite machine à laver est adaptée pour réaliser, sous le contrôle d'une unité de contrôle de séquence de programme, des cycles de fonctionnement incluant en séquence une phase de lavage avec de l'eau chaude, au moins une phase de rinçage avec de l'eau froide et au moins une phase de rinçage avec de l'eau chaude suivie d'une phase de séchage de la charge de lavage, ledit circuit d'alimentation en eau (7) étant relié à la cuve de lavage (1) via une première et une seconde dérivations de canalisation (8,9) qui sont normalement fermées par des moyens de valve (10,12,13) contrôlés par l'unité de contrôle de séquence de programme (16) de sorte à alimenter de manière sélective ladite cuve (1) via ladite première dérivation de canalisation (8) avec l'eau pour réaliser ladite phase de lavage et ladite phase de rinçage à chaud, et via ladite deuxième dérivation de canalisation (9) avec l'eau fournie directement de la canalisation principale pour réaliser ladite phase de rinçage à froid, ledit réservoir (11) étant relié en série dans ladite première dérivation de canalisation (8) en aval d'un système d'adoucissement de l'eau (15), **caractérisée en ce que,** via ladite deuxième dérivation de canalisation (9), la cuve de lavage (1) est alimentée avec l'eau fournie directement à partir de la canalisation principale.

2. Machine à laver automatique selon là revendication 1, **caractérisée en ce que** les moyens de valves (10,12,13) du circuit d'alimentation en eau (7) sont contrôlés par l'unité de contrôle de séquence de programme (16) de sorte à remplir essentiellement ledit réservoir (11) via ladite première dérivation de canalisation (8), pendant ladite phase de lavage, avec de l'eau en provenance de la canalisation principale; ladite eau étant ensuite amenée dans la cuve (1), afin dé réaliser ladite phase de rinçage à chaud, seulement après la fin de ladite phase de rinçage à froid.

3. Machine à laver automatique selon la revendication 2, dans laquelle ladite phase de lavage inclut une période pendant laquelle l'eau dans la cuve est chauffée par des moyens de chauffage contrôlés par l'unité de contrôle de séquence de programme, **caractérisée en ce que** ledit réservoir (11) est rempli avec de l'eau provenant de la canalisation principale après ladite période de chauffage de l'eau dans la cuve (1).

4. Machine à laver automatique selon la revendication 1, **caractérisée en ce que** lesdits moyens de valve (10,12,13) du circuit d'alimentation en eau (7) sont contrôlés par l'unité de contrôle de séquence de programme (16) de sorte à remplir essentiellement ledit réservoir (11) via ladite première dérivation de canalisation (8), pendant ladite phase de séchage de la charge de lavage, avec de l'eau provenant de la canalisation principale qui est alors amenée dans la cuve (1) pour réaliser une phase de lavage d'un cycle de fonctionnement ultérieur de la machine.
